(19) Europäisches Patentamt
European Patent Office
Office européen des brevets

(11) Veröffentlichungsnummer : **0 105 134**
**B1**

(12) **EUROPÄISCHE PATENTSCHRIFT**

(45) Veröffentlichungstag der Patentschrift : **03.12.86**

(51) Int. Cl.⁴ : **C 09 J 3/14**

(21) Anmeldenummer : **83107769.8**

(22) Anmeldetag : **06.08.83**

(54) **Haftkleber auf Basis ethylenisch ungesättigter Verbindungen.**

(30) Priorität : **04.09.82 DE 3232923**

(43) Veröffentlichungstag der Anmeldung : **11.04.84 Patentblatt 84/15**

(45) Bekanntmachung des Hinweises auf die Patenterteilung : **03.12.86 Patentblatt 86/49**

(84) Benannte Vertragsstaaten : **BE DE FR GB IT NL**

(56) Entgegenhaltungen :
**DE-A- 3 219 442**
**FR-A- 2 154 638**
**US-A- 3 551 391**
**US-A- 3 617 362**
**US-A- 3 707 518**
**CHEMICAL ABSTRACTS, Band 88, Nr. 2, 9. Januar 1978, Seite 35, Nr. 7882q, Columbus Ohio (USA)**

**Die Akte enthält technische Angaben, die nach dem Eingang der Anmeldung eingereicht wurden und die nicht in dieser Patentschrift enthalten sind.**

(73) Patentinhaber : **DYNAMIT NOBEL AKTIENGESELLSCHAFT**
**Postfach 1209**
**D-5210 Troisdorf, Bez. Köln (DE)**

(72) Erfinder : **Büning, Robert, Dr.**
**Lessingstrasse 11**
**D-5210 Troisdorf-Sieglar (DE)**
Erfinder : **Huber, Hans, Dr.**
**Adenauerstrasse 32**
**D-5210 Troisdorf-Spich (DE)**

**EP 0 105 134 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung sind Haftkleber auf Basis von Copolymeren aus Verbindungen mit ethylenisch ungesättigten Gruppen, bei denen von den einpolymerisierten Polymeren mindestens eine eine Glasumwandlungstemperatur von < — 20 °C und mindestens ein zweites eine Glasumwandlungstemperatur von > + 20 °C besitzt. Die Glasumwandlungstemperaturen dieser bekannten Copolymeren liegen unterhalb von 0 °C.

In der DE-PS-1 964 743 werden Copolymere aus Acrylsäureestern und N-Vinyllactamen beschrieben. Diese Copolymeren besitzen Glasumwandlungstemperaturen unterhalb von 0 °C und eignen sich direkt oder nach erfolgter Vernetzung als Haftkleber. Sie enthalten mit den Polymeren der Acrylsäureester eine Polymerkomponente mit einer Glasumwandlungstemperatur unterhalb von — 20 °C.

Die Polymeren der N-Vinyllactame besitzen dagegen Glasumwandlungstemperaturen oberhalb von + 20 °C. Durch Kombination dieser beiden Polymerkomponenten innerhalb des dort genannten Mengenbereichs erhält man die Copolymeren mit den Glasumwandlungstemperaturen unterhalb 0 °C, die sich als Haftkleber eignen.

Die Vernetzung dieser Copolymeren zu Haftklebern kann gemäß den Angaben in dieser Patentschrift sowohl als Strahlenvernetzung als auch mit Hilfe von organischen Peroxiden durchgeführt werden.

Bei anderen bekannten Copolymeren aus Verbindungen mit ethylenisch ungesättigten Gruppen und Glasumwandlungstemperaturen unter 0 °C, die ebenfalls als Kleber bekannt sind, erfolgt die chemische Vernetzung z. B. mit Epoxidverbindungen oder Carbodiimiden oder Metallchelaten oder auch über ungesättigte Alkylolamide, die in das Copolymere einpolymerisiert sind.

Die chemische Vernetzung dieser bekannten Copolymerisate hat den Nachteil, daß sie nur bei erhöhter Temperatur erfolgt. In einigen Fällen muß dabei eine Polymerkomponente mit OH-Gruppen, vorzugsweise aus ungesättigten Alkylolamiden, einpolymerisiert vorhanden sein. Dabei tritt auch Vernetzung ein, wenn die Copolymeren in Lösung vorliegen. Dies wirkt sich ungünstig auf die Lagerstabilität bei der Verwendung dieser Produkte als Kleber aus.

Die Vernetzung durch energiereiche Strahlen kann zwar bei Raumtemperatur erfolgen. Sie ist jedoch mit einem großen apparativen Aufwand verbunden und ist nicht immer vollständig ; außerdem erhält sie das Risiko, daß bei ihrer Anwendung nicht sofort erkennbare Strahlenschäden bei dem Bedienungspersonal auftreten können.

Weiterhin werden in der US-PS-4 164 614 Haftkleber auf der oben genannten Basis beschrieben, die zwar ohne Vernetzer eingesetzt werden können, aber den Nachteil besitzen, daß mit ihnen Scherstandfestigkeiten gemäß der Prüfmethode 7 des Pressure Sensitive Tape Council (PSTC) erhalten werden, die mit Werten von unter 24 Stunden für eine Reihe von Anwendungen nicht ausreichend sind. Außerdem müssen sie aus der Schmelze auf das Substrat aufgetragen werden.

Auch aus der US-PS-3 617 362 sind Haftkleber bekannt, die auf Copolymeren von Acrylsäureestern aufgebaut sind. Der zweite, wesentliche Bestandteil dieser Copolymeren ist dort ein Vinylacetat oder ein Methyl(meth)acrylat. Das Copolymere enthält nur geringe Anteile eines (Meth)acrylsilans einpolymerisiert. Haftkleber auf dieser Basis haben den Nachteil, daß sie bereits während der Polymerisationsreaktion vernetzen. Sie werden deshalb in Lösung polymerisiert und müssen innerhalb kurzer Zeit verarbeitet werden.

Es bestand deshalb die Aufgabe, Haftkleber auf der Basis von Copolymeren aus ethylenisch ungesättigten Polymeren herzustellen, bei denen die Vernetzung der Copolymeren bei Raumtemperatur ohne großen apparativen Aufwand erfolgt und die Scherfestigkeiten ergeben, die über 48 Stunden gemäß PSTC-7 liegen. Weiterhin sollen die gewünschten Haftkleber möglichst lösungsmittelfrei appliziert werden können oder aber aus solchen Lösungen aufgetragen werden, die erst nach dem Abdampfen des Lösungsmittels eine Vernetzung ermöglichen.

In Erfüllung dieser Aufgabe wurde nun ein Haftkleber mit den im Anspruch 1 genannten Merkmalen gefunden.

Die erfindungsgemäßen Haftkleber haben Molekulargewichte zwischen 2 000 und 150 000, bestimmt durch Gelpermeationschromatographie (GPC). Die niedrigmolekularen Copolymerisate können ohne Verwendung von Lösungsmitteln bei Zimmertemperatur auf ein Substrat aufgetragen werden und ergeben nach Vernetzung hohe Scherfestigkeiten. Die höhermolekularen Copolymerisate werden aus Lösungen in geeigneten Lösungsmitteln, wie z. B. Essigsäureestern, aufgebracht. In diesen Lösungsmitteln sind sie beständig und vernetzen praktisch nicht, sofern die Lösungen nicht zu konzentriert sind. Nach dem Auftragen auf ein Substrat vernetzen diese Hochpolymeren zu Haftklebern mit noch besseren Scherhaftfestigkeiten als die niedermolekularen erfindungsgemäßen Haftkleber.

Das als Vernetzer eingesetzte Vinylalkoxysilan entspricht der allgemeinen Formel

$$CH_2 = CH - \underset{\displaystyle R'_a}{\overset{}{\underset{|}{Si}}}(OR)_{3-a}$$

in der R' für einen Methyl- oder Ethylrest und R für einen Alkylrest mit 1 bis 4 C-Atomen steht, der gegebenenfalls durch ein oder mehrere Ethersauerstoffatome unterbrochen sein kann. Der Rest a kann 0 oder 1 sein. Beispiele für solche Monomere, die einpolymerisiert werden können, sind : Vinyltrimethoxysilan, Vinyltriethoxysilan, Vinylmethyldimethoxysilan, Vinyl-tris-(β-methoxyethoxy)-silan.

Das Vinylalkoxysilan ist in den Copolymeren in Anteilen zwischen 0,5 und 10 Gew.-% einpolymerisiert. Die Alkoxygruppen der Vinylalkoxysilane reagieren mit Wasser unter intermediärer Bildung von Vinylsilanolen, die dann weiter unter Vernetzung mit den übrigen Bestandteilen des Copolymeren reagieren.

Als Ausgangsmonomere werden einerseits solche Acrylate eingesetzt, die zu Polymeren mit Glasumwandlungstemperaturen unterhalb von — 20 °C polymerisieren. Dazu zählen hauptsächlich Acrylsäureester, deren Esterkomponente 4 bis 12 C-Atome besitzen, wie z. B. n-Octylacrylat, iso-Octylacrylat, 2-Ethylhexylacrylat oder Decylacrylat. Auch höhere Ester der Methacrylsäure, deren Esterkomponente 16 bis 24 C-Atome besitzen, lassen sich einsetzen wie z. B. n-Octadecylmethacrylat. Auch Vinylester höherer Fettsäuren (mit 12 oder mehr C-Atomen) z. B. Vinyllaurat können eingesetzt werden. Es können auch Gemische dieser Ester eingesetzt werden. Der Anteil dieser Komponenten in dem Haftkleber liegt zwischen 60 und 80 Gew.-%.

Der zweite Bestandteil des Copolymeren, in die das Vinylalkoxysilan einpolymerisiert ist, ist ein Polymeres aus Verbindungen mit ethylenisch ungesättigten Gruppen, das, für sich allein polymerisiert, Glasumwandlungstemperaturen über + 20 °C ergibt. Zu dieser Gruppe von Monomeren zählen z. B. die oben genannten Vinyllactame wie z. B. N-Vinylpyrrolidon, Vinylester, wie Vinylacetat, Vinylpropionat, Styrol oder Acrylsäure. Es genügt, wenn einer dieser Verbindungen mit den oben genannten Acryl- oder Methacrylsäureestern copolymerisiert wird, vorausgesetzt, daß dabei ein Copolymeres entsteht, dessen Glasumwandlungstemperatur unter 0 °C liegt. Im allgemeinen werden jedoch mindestens zwei der genannten Monomeren mit den übrigen Bestandteilen des Copolymeren copolymerisiert. Aufgrund der Anwesenheit von einpolymerisierten Vinylalkoxysilanen ist es nicht notwendig, daß die erfindungsgemäßen Copolymerisate bisher bekannte Vernetzer z. B. ungesättigte Alkylolamide für die Vernetzungsreaktion einpolymerisiert oder zugemischt enthalten müssen.

Die Vernetzung und Aushärtung dieser Haftkleber erfolgt bereits bei Raumteperatur durch die Luftfeuchtigkeit. Sie kann dadurch beschleunigt werden, daß der Kleber während oder nach dem Auftragen auf ein Substrat in an sich bekannter Weise mit Wasserdampf gesättigter Luft behandelt wird. Auch der Zusatz von an sich bekannten Vernetzungskatalysatoren beschleunigt die Vernetzung.

Durch die Einwirkung von IR-Strahlung mit Hilfe von handelsüblichen IR-Strahlen läßt sich die Aushärtungszeit wesentlich beschleunigen.

Als Vernetzungskatalysatoren eignen sich die bekannten Vernetzungskatalysatoren wie z. B. Dibutylzinnlaurat oder Säuren wie Sulfonsäuren oder Phosphorsäuren, insbesondere unterphosphorige Säure. Wenn das Copolymere Acrylsäure mit einpolymerisiert enthält, ist der Zusatz solcher Vernetzungskatalysatoren nicht notwendig.

Die Vernetzungskatalysatoren werden in Mengen zwischen 0,1 und 2,0 Gew.-%, bezogen auf den Haftkleber, eingesetzt. Die Zugabe erfolgt vorzugsweise vor dem Auftrag des Haftklebers auf das Substrat ; sie kann jedoch auch dann bereits längere Zeit vor dem Auftragen erfolgen, wenn der Haftkleber in Lösung vorliegt, da die Vernetzung im allgemeinen nur in konzentrierten Lösungen oder bei praktisch lösungsmittelfreien Polymeren erfolgt.

Die bevorzugten Copolymeren sind solche, die durch Copolymerisation von 60 bis 80 Gew.-% Acrylsäureestern, deren Esterkomponente 6 bis 10 C-Atome besitzt mit 30 bis 5 Gew.-% N-Vinylpyrrolidon, 5 bis 15 Gew.-% Styrol oder Vinylacetat und 4 bis 6 Gew.-% Vinyltrialkoxysilan hergestellt sind.

Die Herstellung der neuen Copolymerisate erfolgt auf an sich bekannte Weise durch radikalische Polymerisation der genannten Monomeren. Dem Ansatz können auch Polymerisationsregler, wie z. B. aliphatische Mercaptane, hinzugefügt werden, besonders wenn Produkte mit relativ niedrigem Molekulargewicht gewünscht werden.

Die Polymerisation kann sowohl mit als auch ohne Lösungsmittel durchgeführt werden. Ersteres wird besonders dann bevorzugt, wenn Produkte mit niedrigem Molekulargewicht erhalten werden sollen, die dann sofort, gegebenenfalls nach Untermischen des Vernetzungskatalysators, auf das Substrat aufgebracht werden können.

Wenn die Polymerisation als Lösungspolymerisation durchgeführt werden soll, werden als Lösungsmittel bevorzugt solche Verbindungen eingesetzt, die die Monomeren und besonders die Polymeren aufzulösen vermögen. Solche Lösungsmittel sind dem Fachmann bekannt. Als Beispiele seien Essigsäurealkylester und aromatische, bei Raumtemperatur flüssige Kohlenwasserstoffe genannt. In diesen Lösungsmitteln sind die Copolymeren bei entsprechender Verdünnung ohne Vernetzung löslich. Vor dem Auftragen auf das Substrat wird das Lösungsmittel weitgehend verdampft, nachdem gegebenenfalls noch ein Vernetzungskatalysator untergemischt wurde.

Der Haftkleber braucht nur in dünner Schicht — im allgemeinen zwischen 10 und 80 μ — aufgetragen zu werden, so daß bereits bei normaler Luftfeuchtigkeit genügend Wasser in das Polymere diffundieren kann. Hierdurch tritt Vernetzung ein, die besonders bei Anwesenheit von Katalysatoren praktisch momentan erfolgt.

## Beispiele

A. Herstellung der Copolymerisate

### Beispiel 1

Als Reaktionsgefäß wird ein 500 ml Dreihalskolben mit Rührer, Rückflußkühler und $N_2$-Überleitrohr verwendet. In den Dreihalskolben werden eingebracht : 140 g Ethylhexylacrylat, 40 g N-Vinylpyrrolidon, 20 g Styrol und 10 g Vinyltriethoxysilan sowie 200 ml Essigsäureethylester und 0,75 g Porofor N® (Azoisobuttersäuredinitril). Das Reaktionsgemisch wird unter Rühren auf 65 °C erwärmt. Nach 2 Stunden Reaktionszeit bei 65 °C sowie nach weiteren 3 Stunden werden jeweils noch 0,75 g Porofor N® zum Ansatz gegeben. Nach einer Gesamt-Polymerisationszeit von 7,5 Stunden wurde ein Copolymerisat mit einem Molgewicht von 120 000 (nach GPC) erhalten. Der Umsatz betrug 99 %.

### Beispiel 2

Die Arbeitsweise des Beispiels 1 wurde wiederholt mit dem Unterschied, daß anstelle von 20 g Styrol 20 g Vinylacetat verwendet wurde. Der Umsatz betrug 99 % und das Molgewicht 130 000.

### Beispiel 3

Beispiel 1 wurde wiederholt mit dem Unterschied, daß zusätzlich 12 g Dodecylmercaptan als Regler eingesetzt wurden. Der Umsatz betrug 98 % und das Molgewicht 3 200. Nach Abdampfen des Essigsäureethylesters erhielt man ein streichfähiges lösungsmittelfreies Copolymerisat, das nach Untermischen des Katalysators direkt zur Prüfung der Scherfestigkeit eingesetzt wurde.

### Beispiel 4

Die Arbeitsweise des Beispiels 1 wurde wiederholt mit dem Unterschied, daß als Monomere eingesetzt wurden : 160 g Ethylhexylacrylat, 20 g Acrylsäure, 20 g Styrol und 10 g Vinyltriethoxysilan.

B. Haftklebbeispiele

Die Copolymerisate der Beispiele 1, 2 und 4 wurden aus der Lösung nach Untermischen von 0,5 % $H_3PO_2$ (bezogen auf reines Copolymeres) aufgetragen. Zum Vergleich wurden sie ohne Katalysator aufgetragen. Beispiel 4 wird ohne Zusatz von $H_3PO_2$ aufgetragen. In der folgenden Tabelle sind die erhaltenen Scherfestigkeiten wiedergegeben. Die Scherfestigkeiten wurden wie folgt gemessen :

Der Kleber bzw. die Kleberlösung wird mit einer Rakel auf eine Mylar-Folie (Polyethylenterephthalat-Folie) in einer Stärke von ca. 30 μ aufgebracht. Nach Aufbringen des Klebefilms wird die Folie 45 Minuten bei 50 °C im Vakuum gehalten. Danach wird die Folie mit einer Klebefläche von 25 × 12,5 mm auf ein Eisenblech aufgerollt und mit einem Gewicht von 1 kg belastet. Die Zeit nach der die Klebverbindung reißt, wird als Scherfestigkeit bezeichnet.

### Tabelle

| Beispiel | Scherfestigkeit |
|---|---|
| I | 3,5 Stunden |
| I + $H_3PO_2$ | > 3 Monate |
| II | 6,0 Stunden |
| II + $H_3PO_2$ | > 3 Monate |
| III | 1,5 Stunden |
| III + $H_3PO_2$ | 2 Monate |
| IV | > 3 Monate |

## Patentansprüche

1. Haftkleber auf der Basis von Copolymeren aus Verbindungen mit ethylenisch ungesättigten Gruppen und Silanen mit ungesättigten Gruppierungen, dadurch gekennzeichnet, daß in dem Copolymerisat durch Lösungsmittelpolymerisation oder Polymerisation in Masse einpolymerisiert sind

a) Acryl- oder Methacrylsäureester in Anteilen zwischen 60 und 80 Gew.-%, die — allein polymerisiert — ein Polymeres mit Glasumwandlungstemperaturen unterhalb — 20 °C ergeben,

b) Vinylalkoxysilane der Formel

$$CH_2 = CH - \underset{\underset{R'_a}{|}}{Si} (OR)_{3-a}$$

in der R' für einen Methyl- oder Ethylrest, R für einen Alkylrest mit 1 bis 4 C-Atomen steht und a gleich 0 oder 1 sein kann, in Anteilen zwischen 0,5 und 10 Gew.-%, und

c) ethylenisch ungesättigte Verbindungen aus der Gruppe Vinyllactame, Vinylester, Styrol oder Acrylsäure, die — allein polymerisiert — ein Polymeres mit Glasumwandlungstemperaturen über + 20 °C ergeben in einer Gewichtsmenge die 100 % ergibt

und das Copolymerisat Glasumwandlungstemperaturen unter 0 °C besitzt.

2. Haftkleber gemäß Anspruch 1, dadurch gekennzeichnet, daß als Bestandteil c) Vinylpyrrolidon in Anteilen zwischen 5 und 30 Gew.-% und Styrol oder Vinylacetat in Anteilen zwischen 5 und 15 Gew.-% eingesetzt ist.

**Claims**

1. Contact adhesive based on copolymers of compounds with ethylenically unsaturated groups and silanes with unsaturated groupings, characterised in that there are polymerised in the copolymerisate by solvent polymerisation or bulk polymerisation

a) acrylic or methacrylic acid esters in amounts between 60 and 80 % by weight which — polymerised alone — produce a polymer with glass transition temperatures below — 20 °C,

b) vinylalkoxy silanes of the formula

$$CH_2 = CH - \underset{\underset{R'_a}{|}}{Si} (OR)_{3-a}$$

in which R' stands for a methyl ethyl residue, R for an alkyl residue with 1 to 4 C-atoms and a can be equal to 0 or 1, in amounts between 0.5 and 10 % by weight, and

c) ethylenically unsaturated compounds from the group vinyllactams, vinylesters, styrene or acrylic acid, which — polymerised alone — produce a polymer with glass transition temperatures above + 20 °C in an amount by weight which makes up to 100 %

and the copolymerisate possesses glass transition temperatures below 0 °C.

2. Contact adhesive according to claim 1, characterised in that vinylpyrrolidone in amounts between 5 and 30 % by weight and styrene or vinylacetate in amounts between 5 and 15 % by weight is employed as component c).

**Revendications**

1. Colle sensible à la pression, à base de copolymères de composés comportant des groupes à insaturation éthylénique et de silanes comportant des groupes insaturés, caractérisée en ce qu'elle comporte, introduits par polymérisation en présence d'un solvant ou polymérisation en masse dans le copolymère :

a) Des esters de l'acide acrylique ou de l'acide méthacrylique, en des proportions comprises entre 60 et 80 % en poids et qui, quand on les polymérise seuls, donnent un polymère ayant des températures de transition vitreuse inférieures à — 20 °C.

b) Des vinylalcoxysilanes de formule :

$$CH_2 = CH - \underset{\underset{R'_a}{|}}{Si} (OR)_{3-a}$$

dans laquelle R' représente un reste méthyle ou éthyle, R représente un reste alkyle ayant 1 ou 4 atomes de carbone, et a peut valoir 0 ou 1, en des proportions comprises entre 0,5 et 10 % en poids, et

c) Des composés à insaturation éthylénique choisis dans le groupe formé par des vinyllactames, des esters vinyliques, du styrène ou l'acide acrylique et qui, quand on les polymérise isolément, en une quantité pondérale correspondant à 100 %, donnent un polymère ayant des températures de transition

vitreuse supérieures à + 20 °C,
et en ce que le copolymère présente des températures de transition vitreuse inférieures à 0 °C.

2. Colle sensible à la pression selon la revendication 1, caractérisée en ce qu'on utilise comme constituant c) de la vinylpyrrolidone en des proportions comprises entre 5 et 30 % en poids et du styrène ou de l'acétate de vinyle en des proportions comprises entre 5 et 15 % en poids.